# EUROPEAN PATENT APPLICATION

(11) **EP 4 546 663 A1**
(43) Date of publication of application: **30.04.2025**
(21) Application number: 23826330.5
(22) Date of filing: 19.06.2023
(51) Int. Cl.: H04B 7/155

(54) **METHOD FOR CONFIGURING TURNING-ON/OFF STATE OF NCR NODE, AND NCR NODE AND NETWORK-SIDE DEVICE**

(30) Priority: 24.06.2022 CN 202210726499
(71) Applicant: Vivo Mobile Communication Co., Ltd., Dongguan, Guangdong 523863 (CN)
(72) Inventor: LIU, Jinhua, Dongguan, Guangdong 523863 (CN); WANG, Huan, Dongguan, Guangdong 523863 (CN); PENG, Shuyan, Dongguan, Guangdong 523863 (CN)
(74) Representative: Cabinet Beaumont
(86) International application number: PCT/CN2023/101004
(87) International publication number: WO 2023/246682

(57) **Abstract**

The present application belongs to the field of wireless communications. Disclosed are a method for configuring a turning-on/off state of an NCR node, and an NCR node and a network-side device. The method for configuring a turning-on/off state of an NCR node in the embodiments of the present application comprises: a network-side device sending at least one piece of turning-on/off state configuration information to an NCR node, wherein the turning-on/off state configuration information is used for configuring a turning-on/off state of the NCR node; the turning-on/off state configuration information comprises a cycle parameter for indicating a switching cycle of the turning-on/off state and a turning-on window parameter for indicating a time period of a turning-on state; and the turning-on window parameter comprises at least one of the following: a time offset and a window length of a turning-on window.

## Description

### CROSS-REFERENCE TO RELATED APPLICATIONS

The present invention claims priority to Chinese Patent Application No. 202210726499.9, filed with the China National Intellectual Property Administration on June 24, 2022 and entitled "ON-OFF STATE CONFIGURATION METHOD FOR NCR NODE, NCR NODE, AND NETWORK-SIDE DEVICE", which is incorporated herein by reference in its entirety.

### TECHNICAL FIELD

This application pertains to the field of wireless communication technologies, and specifically, relates to an on-off state configuration method for a base station controlled repeater (Network Controlled Repeater, NCR) node, an NCR node, and a network-side device.

### BACKGROUND

An NCR node, also referred to as a smart repeater (smart repeater), is configured to extend a coverage area of a cell, including: receiving and amplifying a downlink signal that comes from an upstream base station, so that strength of a signal arriving at a terminal device (User Equipment, UE) increases; and amplifying an uplink signal that comes from the UE, so that strength of an uplink signal that comes from the UE to the upstream base station increases.

The NCR node may receive control from the upstream base station. To be specific, the base station may control transmission parameters of the smart repeater to improve operation efficiency of the repeater and reduce interference. In downlink, the NCR node forwards a signal sent by the base station to the UE. A forwarding process includes: receiving the signal from the base station, amplifying the signal, and sending an amplified signal to the UE. In uplink, the NCR node forwards a signal sent by the UE to the base station. A forwarding process includes: receiving the signal from the UE, amplifying the signal, and sending an amplified signal to the base station. When the NCR node forwards the signal, a receiver antenna of the NCR node provides a reception gain, a transmitter antenna of the NCR node provides a transmission gain, and a power amplifier of the NCR node provides a forwarded-signal amplification gain. A signal received by the base station from the UE is enhanced through uplink signal forwarding, to better resist interference.

In practical application, the NCR node does not always need to forward signals. If the NCR node is always in an on state, to be specific, keeps monitoring downlink signals and uplink signals, unnecessary interference may occur, and consequently, power consumption of the NCR node is high.

### SUMMARY

Embodiments of this application provide an on-off state configuration method for an NCR node, an NCR node, and a network-side device, to resolve a problem that an NCR node may cause unnecessary interference and power consumption of the NCR node is high.

According to a first aspect, an on-off state configuration method for an NCR node is provided. **The** method includes: sending, by a network-side device, at least one piece of on-off state configuration information to an NCR node, where the on-off state configuration information is used for configuring an on-off state of the NCR node, the on-off state configuration information includes a period parameter for indicating a switching period of an on-off state and an on window parameter for indicating a time period of an on state, and the on window parameter includes at least one of the following: a time offset and a window length of an on window.

According to a second aspect, an on-off state configuration apparatus for an NCR node is provided. **The** apparatus includes: an obtaining module, configured to obtain at least one piece of on-off state configuration information for an NCR node, where the on-off state configuration information is used for configuring an on-off state of the NCR node, the on-off state configuration information includes a period parameter for indicating a switching period of an on-off state and an on window parameter for indicating a time period of an on state, and the on window parameter includes at least one of the following: a time offset and a window length of an on window; and a sending module, configured to send the at least one piece of on-off state configuration information to the NCR node.

According to a third aspect, an on-off state configuration method for an NCR node is provided. The method includes: receiving, by an NCR node, at least one piece of on-off state configuration information sent by a network-side device, where the on-off state configuration information is used for configuring an on-off state of the NCR node, the on-off state configuration information includes a period parameter for indicating a switching period of an on-off state and an on window parameter for indicating a time period of an on state, and the on window parameter includes at least one of the following: a time offset and a window length of an on window.

According to a fourth aspect, an on-off state configuration apparatus for an NCR node is provided. The apparatus includes: a receiving module, configured to receive at least one piece of on-off state configuration information sent by a network-side device, where the on-off state configuration information is used for configuring an on-off state of an NCR node, the on-off state configuration information includes a period parameter for indicating a switching period of an on-off state and an on window parameter for indicating a time period of an on state, and the on window parameter includes at least one of the following: a time offset and a window length of an on window; and an activation module, configured to activate one or more of the at least one piece of on-off state configuration information.

According to a fifth aspect, a network-side device is provided. The network-side device includes a processor and a memory. The memory stores a program or instructions capable of running on the processor. When the program or instructions are executed by the processor, the steps of the method according to the first aspect are implemented.

According to a sixth aspect, a network-side device is provided, including a processor and a communication interface. The processor is configured to implement the steps of the method according to the first aspect. The communication interface is configured to communicate with an external device.

According to a seventh aspect, an NCR node is provided. The NCR node includes a processor and a memory. The memory stores a program or instructions capable of running on the processor. When the program or instructions are executed by the processor, the steps of the method according to the third aspect are implemented.

According to an eighth aspect, an NCR node is provided, including a processor and a communication interface. The processor is configured to implement the steps of the method according to the third aspect. The communication interface is configured to communicate with an external device.

According to a ninth aspect, an on-off state configuration system for an NCR node is provided. The system includes a network-side device and an NCR node. The network-side device may be configured to perform the steps of the method according to the first aspect. The NCR node may be configured to perform the steps of the method according to the third aspect.

According to a tenth aspect, a readable storage medium is provided. The readable storage medium stores a program or instructions. When the program or instructions are executed by a processor, the steps of the method according to the first aspect are implemented, or the steps of the method according to the third aspect are implemented.

According to an eleventh aspect, a chip is provided. The chip includes a processor and a communication interface. The communication interface is coupled to the processor. The processor is configured to run a program or instructions to implement the steps of the method according to the first aspect, or implement the steps of the method according to the third aspect.

According to a twelfth aspect, a computer program or program product is provided. The computer program or program product is stored in a storage medium. The computer program or program product is executed by at least one processor to implement the steps of the method according to the first aspect, or implement the steps of the method according to the third aspect.

In the embodiments of this application, a network-side device semi-persistently configures an on-off state of an NCR node, so that an on-off state of forwarding by the NCR node periodically switches. Configured parameters include a period parameter for indicating a switching period of an on-off state and an on window parameter for indicating a time period of an on state. A time domain position of an on window is determined by a time offset parameter and a window length parameter. In the on window, the NCR node may forward uplink and downlink signals. Beyond the on window, the NCR node is in an off state. This can reduce unnecessary interference caused by the NCR node, reduce power consumption of the NCR node, and facilitate energy saving of the NCR node.

### BRIEF DESCRIPTION OF THE DRAWINGS

FIG. 1 is a block diagram of a wireless communication system to which embodiments of this application are applicable;
FIG. 2 is a schematic flowchart of an on-off state configuration method for an NCR node according to an embodiment of this application;
FIG. 3 is a schematic diagram of an on-off state configuration according to an embodiment of this application;
FIG. 4 is a schematic diagram of activation of an on window according to an embodiment of this application;
FIG. 5 is another schematic flowchart of an on-off state configuration method for an NCR node according to an embodiment of this application;
FIG. 6 is a schematic structural diagram of an on-off state configuration apparatus for an NCR node according to an embodiment of this application;
FIG. 7 is another schematic structural diagram of an on-off state configuration apparatus for an NCR node according to an embodiment of this application;
FIG. 8 is a schematic structural diagram of a communication device according to an embodiment of this application; and
FIG. 9 is a schematic diagram of a hardware structure of a network-side device according to an embodiment of this application.

### DETAILED DESCRIPTION

The following clearly describes the technical solutions in the embodiments of this application with reference to the accompanying drawings in the embodiments of this application. Clearly, the described embodiments are some but not all of the embodiments of this application. All other embodiments obtained by persons of ordinary skill in the art based on the embodiments of this application fall within the protection scope of this application.

The terms "first", "second", and the like in this specification and the claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not limit the number of objects. For example, there may be one or more first objects. In addition, in this specification and the claims, "and/or" indicates at least one of connected objects, and the character "/" generally indicates an "or" relationship between contextually associated objects.

It should be noted that technologies described in the embodiments of this application are not limited to a long term evolution (Long Term Evolution, LTE)/LTE-advanced (LTE-Advanced, LTE-A) system, and may also be applied to other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the technology described herein may be used in the aforementioned systems and radio technologies as well as other systems and radio technologies. In the following descriptions, a new radio (New Radio, NR) system is described for an illustration purpose, and NR terms are used in most of the following descriptions, but these technologies may also be applied to applications other than an NR system application, for example, a 6^{th} generation (6^{th} Generation, 6G) communication system.

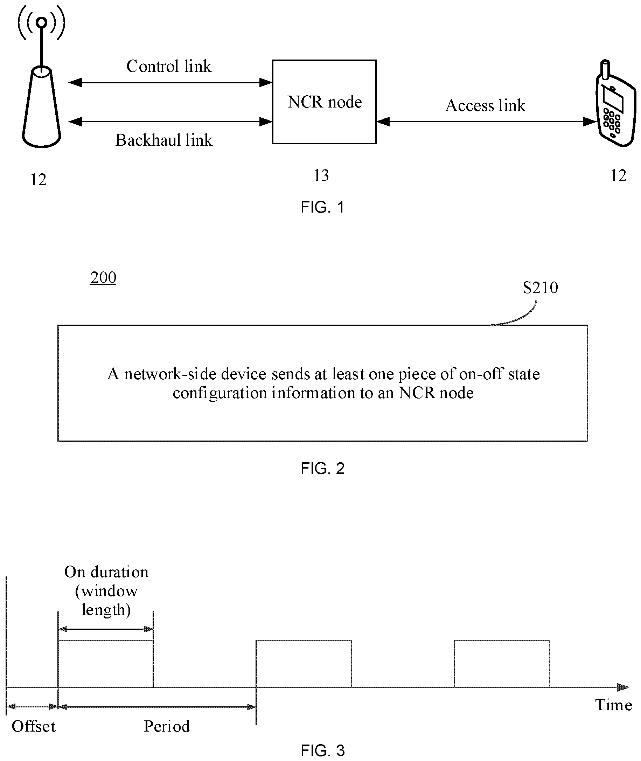

FIG. 1 is a block diagram of a wireless communication system to which embodiments of this application are applicable. The wireless communication system includes a terminal 11, a network-side device 12, and an NCR node 13. The terminal 11 may be a terminal-side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), smart household (a home appliance with a wireless communication function, for example, a refrigerator, a television, a washing machine, or furniture), a game console, a personal computer (personal computer, PC), a teller machine, or a self-service machine. The wearable device includes a smart watch, a smart band, a smart headset, smart glasses, smart jewelry (a smart bangle, a smart bracelet, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device and/or a core network device. The access network device 12 may also be referred to as a radio access network device, a radio access network (Radio Access Network, RAN), a radio access network function, or a radio access network unit. The access network device 12 may include a base station, a wireless local area network (Wireless Local Area Network, WLAN) access point, a Wi-Fi node, or the like. The base station may be referred to as a NodeB, an evolved NodeB (evolved NodeB, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the art. Provided that the same technical effect is achieved, the base station is not limited to a specific technical term. It should be noted that the base station in the NR system is used only as an example for description in the embodiments of this application, but a specific type of the base station is not limited.

The NCR node 13 is an intermediate network node, and may include a termination module (Mobile Termination, MT) and a repeater unit (Repeater Unit, RU). Alternatively, the NCR node 13 may include only one of the MT or the RU. The MT may establish a connection to an upstream base station, and the base station may indicate sending/receiving-related parameters of the MT/RU of the NCR node 13 by exchanging control signaling with the NCR node 13 through the MT. A radio signal path between the base station 12 and UE 11 includes a backhaul link (Backhaul link), and forwarding processing and an access link (Access link) of the RU of the NCR node 13. The backhaul link is a radio signal path between the base station 12 and the RU of the NCR node 13. The access link is a radio signal path between the RU of the NCR node 13 and the UE 11. Side control (side control) information between the base station 12 and the NCR node 13 is transmitted through a control link (control link) between the base station 12 and the MT of the NCR node 13, and may be used for controlling a forwarding beam, forwarding power, an on-off state, and the like of the NCR node.

The following describes in detail an on-off state configuration solution for an NCR node in the embodiments of this application with reference to accompanying drawings and by using some embodiments and application scenarios thereof.

FIG. 2 is a schematic flowchart of an on-off state configuration method for an NCR node according to an embodiment of this application. The method 200 may be performed by a network-side device. In other words, the method may be performed by software or hardware installed on the network-side device. As shown in FIG. 2, the method may include the following steps.

S210: The network-side device sends at least one piece of on-off state configuration information to an NCR node.

In this embodiment of this application, the on-off state configuration information is used for configuring an on-off state of the NCR node, the on-off state configuration information includes a period parameter for indicating a switching period of an on-off state and an on window parameter for indicating a time period of an on state, and the on window parameter includes at least one of the following: a time offset and a window length of an on window. The network-side device configures the switching period of the on-off state of the NCR node and an on window in each switching period based on the on-off state configuration information. The NCR node may be in the on state within on duration (On-duration) of the on window.

In this embodiment of this application, because the on-off state configuration information is semi-persistently configured, the on-off state configuration information may also be referred to as semi-persistent on-off (ON-OFF) state configuration information.

For example, the on-off state configuration information may configure a semi-persistent on-off state shown in FIG. 3. The time offset of the on window may be an offset relative to a moment at which the on-off state configuration information is received, to be specific, the receiving moment plus the time offset is a starting moment of the on window; or may be an offset relative to another moment. After receiving the on-off state configuration information, the NCR node may activate the on-off state configuration information. In the on window, the NCR node is in the on state, in other words, performs signal forwarding. Beyond the on window, the NCR node is in an off state, in other words, performs no signal forwarding. This can reduce interference caused by unnecessary forwarding by the NCR node and reduce power consumption of the NCR node.

In a possible implementation, the on-off state configuration may further include at least one of the following:
(1) Configuration information of an uplink beam of an access link, where the access link is a radio link between the NCR node and a terminal. The NCR node may determine, based on the configuration information of the uplink beam of the access link, a beam parameter to be used for receiving an uplink signal sent by UE. The network-side device may configure an appropriate uplink beam based on a current network environment and/or a type of a transmitted signal, to improve operation efficiency of the NCR node to receive the uplink signal, and reduce interference.
(2) Configuration information of a downlink beam of the access link. **The** NCR node may determine, based on the configuration information of the downlink beam of the access link, an uplink beam to be used for forwarding a downlink signal to the UE. **The** network-side device may configure an appropriate downlink beam based on a current network environment and/or a type of a transmitted signal, to improve operation efficiency of the NCR node to forward the downlink signal, and reduce interference.
(3) Configuration information of an uplink beam of a backhaul link, where the backhaul link is a radio signal path between the network-side device and the NCR node. **The** NCR node may determine, based on the configuration information of the uplink beam of the backhaul link, a beam to be used for forwarding, to the network-side device, the uplink signal sent by the UE. **The** network-side device may configure an appropriate uplink beam of the backhaul link based on a current network environment and/or a type of a transmitted signal, to improve operation efficiency of the NCR node to forward the uplink signal, and reduce interference.
(4) Configuration information of a downlink beam of the backhaul link. **The** NCR node may determine, based on the configuration information of the uplink beam of the backhaul link, a beam parameter to be used for receiving a downlink signal sent by the network-side device. **The** network-side device may configure an appropriate downlink beam of the backhaul link based on a current network environment, to improve operation efficiency of the NCR node to receive the downlink signal, and reduce interference.
(5) Configuration information of forwarding power of the NCR node. **The** NCR node may determine, based on the configuration information of the forwarding power, a power configuration to be used for forwarding a signal. **The** network-side device may configure forwarding power based on a current network environment and/or a type of a transmitted signal, to improve operation efficiency of the NCR node to forward the signal, and reduce interference.
(6) Sending/receiving configuration information of side control (Side control) information corresponding to the on-off state. **The** NCR node may determine, based on the sending/receiving configuration information, a manner of receiving and parsing the side control information.
   Optionally, the sending/receiving configuration information of the side control information may include but is not limited to at least one of the following:
   (a) A format configuration of a physical downlink control channel (Physical downlink control channel, PDCCH) for receiving side control information. **The** NCR node may learn of, based on the configuration, a format of the PDCCH for receiving the side control information, and therefore may configure, based on the format, the PDCCH for reception.
   (b) A search resource configuration of the PDCCH for receiving the side control information. The NCR node may learn of, based on the configuration, a resource on which the PDCCH is searched for, and therefore may monitor the corresponding PDCCH and receive the side control information.
   (c) A detection position configuration of the PDCCH for receiving the side control information. The NCR node may learn of, based on the configuration, a position at which the PDCCH is to be detected, and therefore may detect the PDCCH at the corresponding position and receive the side control information.
   (d) A configuration of a control resource set (CORSET) for receiving side control information. The NCR node may learn of, based on the configuration, the CORSET for receiving the side control information, and therefore receive the side control information through the corresponding CORSET.
   (e) A configuration of a radio network temporary identifier (Radio Network Temporary Identifier, RNTI) for receiving side control information. The NCR node may learn of, based on the configuration, the RNTI for receiving the side control information, and therefore may parse received information based on the RNTI to obtain the side control information to be sent to the NCR node.
(7) Time-frequency resource configuration information. The NCR node may learn of, based on the configuration information, a time-frequency resource to which the on-off state configuration information is applied. For example, the time-frequency resource information may include a carrier identifier or a cell identifier, for example, a carrier sequence number or a cell sequence number.
(8) A forwarding direction in the on state. The NCR node may learn of, based on the configuration information, a forwarding direction to which the on-off state configuration information is applied, to be specific, a direction of a signal forwarded in an on window configured by the on-off state configuration information. For example, the forwarding direction may be uplink forwarding (to be specific, the NCR node forwards only uplink signals in the on state), downlink forwarding (to be specific, the NCR node forwards only downlink signals in the on state), or uplink/downlink forwarding (to be specific, the NCR node may forward both uplink and downlink signals in the on state).
(9) Indication information for a forwarding enabling mode in the on window. For example, the indication information for the forwarding enabling mode may indicate to always use forwarding in the on window. To be specific, the NCR node can perform signal forwarding in the on window. For example, for a broadcast signal (for example, a synchronization signal/physical broadcast channel signal block (Synchronization Signal and PBCH block, SSB), a channel state information-reference signal (Channel State Information-Reference Signal, CSI-RS), or other information), the network-side device may configure the indication information for the forwarding enabling mode to indicate to always use forwarding in the on window. Alternatively, the indication information for the forwarding enabling mode may indicate to enable forwarding when side control information is received in the on window. To be specific, the NCR node can perform signal forwarding only when side control information is received in the on window. For example, for a physical channel with random arrival (for example, a physical downlink shared channel (Physical downlink shared channel, PDSCH) or a physical uplink shared channel (Physical uplink shared channel, PUSCH)), the network-side device may configure the indication information for the forwarding enabling mode to indicate to enable forwarding when side control information is received in the on window.
(10) Identification information of the on-off state configuration information. The on-off state configuration information may be identified by using the identification information. This facilitates a subsequent control operation on the on-off state configuration information, for example, activating or deactivating specific on-off state configuration information. Optionally, the identification information of the on-off state configuration information may be a sequence number of the on-off state configuration information.

In the foregoing possible implementation, based on a type of a signal that the NCR node needs to forward and/or a network environment, the network-side device may configure on-off state configuration information that adapts to a requirement of a corresponding signal type or that is suitable for a corresponding network environment, to meet different requirements of various signal types and/or network environments.

In a possible implementation, the configuration information of the forwarding power includes at least one of the following:
(1) Maximum uplink forwarding power. Maximum forwarding power of the NCR node to forward an uplink signal may be controlled based on the configuration information, to reduce interference caused by forwarding the uplink signal by the NCR node.
(2) Maximum uplink forwarding power spectral density. Maximum forwarding power spectral density of the NCR node to forward an uplink signal may be controlled based on the configuration information, to reduce interference caused by forwarding the uplink signal by the NCR node.
(3) Maximum downlink forwarding power. Maximum forwarding power of the NCR node to forward a downlink signal may be controlled based on the configuration information, to reduce interference caused by forwarding the downlink signal by the NCR node.
(4) Maximum downlink forwarding power spectral density. Maximum forwarding power spectral density of the NCR node to forward a downlink signal may be controlled based on the configuration information density, to reduce interference caused by forwarding the downlink signal by the NCR node.
(5) Minimum uplink forwarding power. Minimum forwarding power of the NCR node to forward an uplink signal may be controlled based on the configuration information, to ensure a gain produced by forwarding the uplink signal by the NCR node.
(6) Minimum uplink forwarding power spectral density. Minimum forwarding power spectral density of the NCR node to forward an uplink signal may be controlled based on the configuration information, to ensure a gain produced by forwarding the uplink signal by the NCR node.
(7) Minimum downlink forwarding power. Minimum forwarding power of the NCR node to forward a downlink signal may be controlled based on the configuration information, to ensure a gain produced by forwarding the downlink signal by the NCR node.
(8) Minimum downlink forwarding power spectral density. Minimum forwarding power spectral density of the NCR node to forward a downlink signal may be controlled based on the configuration information, to ensure a gain produced by forwarding the downlink signal by the NCR node.
(9) Maximum magnification of the NCR node for forwarding a signal in uplink. Maximum magnification of the NCR node to forward an uplink signal may be controlled based on the configuration information, to reduce interference caused by forwarding the uplink signal by the NCR node.
(10) Minimum magnification of the NCR node for forwarding a signal in uplink. Minimum magnification of the NCR node to forward an uplink signal may be controlled based on the configuration information, to ensure a gain produced by forwarding the uplink signal by the NCR node.
(11) Maximum magnification of the NCR node for forwarding a signal in downlink. Maximum magnification of the NCR node to forward a downlink signal may be controlled based on the configuration information, to reduce interference caused by forwarding the downlink signal by the NCR node.
(12) Minimum magnification of the NCR node for forwarding a signal in downlink. Minimum magnification of the NCR node to forward a downlink signal may be controlled based on the configuration information, to ensure a gain produced by forwarding the downlink signal by the NCR node.
(13) First indication information, where the first indication information indicates the NCR node to use a power control ring, or the first indication information indicates the NCR node not to use a power control ring. The NCR node may learn, based on the first indication information, whether to use a specific power control ring during signal forwarding, to improve forwarding efficiency of the NCR node and avoid interference to a neighbor cell caused by excessively high forwarding power.
(14) Second indication information, where the second indication information is used for indicating fixed target forwarding power of the NCR node for uplink forwarding or downlink forwarding. The NCR node may perform, based on the second indication information, uplink forwarding or downlink forwarding at fixed target forwarding power, to ensure that strength of an effective uplink forwarded signal and downlink forwarded signal of the NCR node can reach an expected coverage area.
(15) Third indication information, where the third indication information is used for indicating fixed target forwarding power spectral density of the NCR node for uplink forwarding or downlink forwarding. The NCR node may perform, based on the third indication information, uplink forwarding or downlink forwarding at fixed target forwarding power spectral density, to ensure that strength of an effective uplink forwarded signal and downlink forwarded signal of the NCR node can reach an expected coverage area.
(16) Fixed power magnification of the NCR node for uplink forwarding in the on state. This parameter is configured, so that an uplink forwarded signal of the NCR node can reach expected strength.
(17) Fixed power magnification of the NCR node for downlink forwarding in the on state. This parameter is configured, so that a downlink forwarded signal of the NCR node can reach expected strength.
(18) A power value of the NCR node in the off state. This parameter is configured, so that power consumption of the NCR node with forwarding stopped can be minimized.
(19) Power magnification of the NCR node in the off state. This parameter is configured, so that power consumption of the NCR node with forwarding stopped can be minimized.

In this embodiment of this application, when the network-side device sends the at least one piece of on-off state configuration information, for one piece of on-off state configuration information, in a possible implementation, the network-side device may send the on-off state configuration information to the NCR node through radio resource control (Radio Resource Control, RRC) signaling, where the RRC signaling may include all configuration parameters configured by the on-off state configuration information. To be specific, in this possible implementation, all semi-persistent on-off configuration parameters are configured by the RRC. The configuration parameters include but are not limited to: a starting-time offset of an on window (or a starting-time offset of a period), a window length of the on window, and a period in which the on window appears, where the starting-time offset of the on window (or the starting-time offset of the period) and the window length may alternatively be indicated by a bitmap of a slot/symbol or configured by an slot/symbol sequence. Certainly, in addition to the foregoing configuration parameters, the RRC signaling may further configure other parameters included in the on-off state configuration information. In this possible implementation, all configuration parameters of the on-off state configuration information are configured by the RRC signaling, so that configuration efficiency can be improved.

Alternatively, in another possible implementation, the network-side device sends a part of configuration parameters in the on-off state configuration information to the NCR node through first signaling, and sends the other part of configuration parameters in the on-off state configuration information to the NCR node through second signaling, where the first signaling includes RRC signaling, and the second signaling includes Medium Access Control (Medium Access Control, MAC) control element (Control Element, CE) signaling or PDCCH signaling. In this possible implementation, a part of semi-persistent on-off configuration parameters are configured by the RRC, and a part of parameters are configured/indicated by the MAC CE or the PDCCH during activation of a semi-persistent on-off configuration. For example, some parameters that are not frequently adjusted, such as a period and an offset of an on window, sending and receiving configurations for side control information, and a cell used for semi-persistent configuration, may be configured by the RRC. Some parameters that need to be adjusted based on radio link quality or forwarding transmission load, such as information about target forwarding power, information about a target carrier, and on-window length information, may be configured/indicated by the MAC CE or the PDCCH. In this possible implementation, overheads of the RRC signaling can be reduced, and configuration flexibility of the on-off state configuration information can be improved, so that configuration parameters can better adapt to radio link quality or forwarding transmission load.

In this embodiment of this application, the on-off state configuration information may be activated after being received by the NCR node. For example, when all the configuration parameters of the on-off state configuration information are configured by the RRC signaling, an NCR-MT activates the on-off state configuration information based on configuration parameters after receiving the configuration parameters from the network-side device.

When a part of configuration parameters of the on-off state configuration information are sent through each of the first signaling and the second signaling, the NCR node does not activate the on-off state configuration information after receiving the first signaling, but activates the on-off state configuration information after receiving the second signaling. To be specific, the second signaling is further used for activating the on-off state configuration information. For example, after the RRC provides a part of configuration parameters, the semi-persistent on-off configuration is still in an inactive state, and the MAC CE or the PDCCH further needs to provide a part of parameters for activation. The NCR-MT activates a corresponding semi-persistent on-off state after receiving the parameters provided by the MAC CE or the PDCCH.

Alternatively, the NCR node may not activate the on-off state configuration information after receiving the on-off state configuration information, but the network-side device activates the on-off state configuration information by using an activation command. For example, the network-side device may activate the on-off state configuration information by using a PDCCH or a MAC CE. If the network-side device has configured a plurality of pieces of on-off state configuration information, the activation command can carry an identifier, for example, a sequence number, of on-off state configuration information that needs to be activated.

In addition, the network-side device may further send a deactivation command to the NCR node to deactivate specific on-off state configuration information, or send a release command to release specific on-off state configuration information. To be specific, the release command is used for indicating the NCR node to set specific on-off state configuration information to be invalid, and/or delete the on-off state configuration information. Therefore, in a possible implementation, after S210, the method may further include: The network-side device sends third signaling to the NCR node, where the third signaling is used for deactivating or releasing the on-off state configuration information. For example, the network-side device deactivates the on-off state by using a MAC CE or a PDCCH. In addition, a PDCCH or a MAC CE for deactivating or releasing a semi-persistent on-off configuration can further carry a sequence number of the semi-persistent on-off configuration that needs to be deactivated.

In a possible implementation, an indication window may be further configured for the on window configured by the on-off state configuration information. At time when the NCR node needs to forward a signal, the network-side device may send indication information in the indication window corresponding to the on window to activate the corresponding on window. When the NCR node receives the indication information in the corresponding indication window, the NCR node activates the corresponding on window, to be specific, performs signal forwarding in the corresponding on window, in other words, enters the on state. Otherwise, the NCR node does not enter the on state in the corresponding on window, in other words, remains in the off state. This can further reduce unnecessary interference caused by the NCR node and reduce power consumption of the NCR node. Therefore, in this possible implementation, after S210, the method may further include: When a first target on window configured by the on-off state configuration information needs to be activated, the network-side device sends, to the NCR node in an indication window corresponding to the first target on window, a first indication signal for indicating to activate the first target on window.

In the foregoing possible realization, the indication window may be located before the first target on window, or may be located in the first target on window and located in the front of the first target on window; or a part of the indication window may be located before the first target on window, and the other part is located in the front of the first target on window.

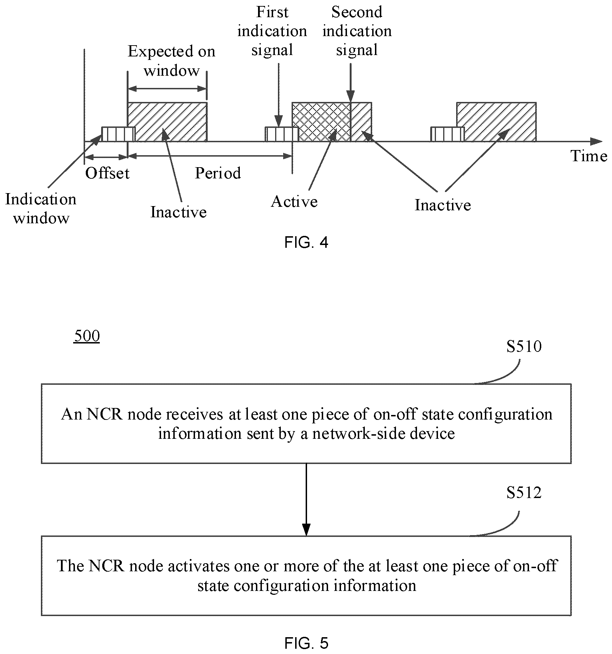

For example, a corresponding window (referred to as an indication window) for indicating to enable an on window is configured at each expected on window position. The NCR-MT detects whether an indication indicating to activate the on window exists in the indication window, and if the indication is received, stops monitoring an indication signal in the indication window and activates the on window. As shown in FIG. 4, a corresponding window (namely, an indication window) for transmitting an on-window activation indication exists in the front of each expected on window (located before on duration (on duration) of the on window, or located in the on duration, or partially located in the on duration). If the NCR-MT receives an activation indication in the window, the NCR-MT enables a corresponding on window. Otherwise, the corresponding on window is in an inactive state (equivalent to a case that the expected on window in FIG. 4 is skipped, in other words, a corresponding expected on window is skipped).

In this embodiment, an expected enabling position for an on window may be preconfigured by the network-side device; or the network-side device may not provide an expected enabling position for an on window, and the NCR node may activate the on window based on a preconfigured window length after receiving an enabling indication.

In a possible implementation, the indication window may be agreed upon in a protocol, or the network-side device may configure a periodic indication window. Therefore, before the network-side device sends, to the NCR node in the indication window corresponding to the first target on window, the first indication signal for indicating to activate the first target on window, the method may further include: The network-side device sends indication window configuration information to the NCR node, where the indication window configuration information includes configuration information of an indication window corresponding to an on window configured by the on-off state configuration information.

Optionally, the configuration information of the indication window may include at least one of the following:
(1) a time offset of the indication window;
(2) a window length of the indication window;
(3) a period of the indication window;
(4) a format of downlink control information (Downlink Control Information, DCI) carrying the first indication signal;
(5) an RNTI corresponding to the DCI;
(6) a time-frequency position at which the DCI is to be received; and
(7) a period of the DCI.

The NCR node may receive, from the network-side device based on the configuration information of the indication window, indication information that indicates the NCR node to activate the on window on demand, to implement on-demand activation of the on window.

In this embodiment of this application, the NCR node is in the on (ON) state within on duration (ON duration) of the target on window.

In a possible implementation, the NCR node may no longer need to forward a signal before on duration of an on window ends. In this case, the network-side device may indicate the NCR node to end the on state in advance to reduce power consumption. Therefore, in this possible implementation, after the network-side device sends the at least one piece of on-off state configuration information to the NCR node, the method further includes: sending a second indication signal to the NCR node within on duration of a second target on window configured by the on-off state configuration information, where the second indication signal is used for indicating the NCR node to close the second target on window, in other words, deactivate the second target on window. For example, when an NR node (NR Node B, gNB) determines to no longer use the NCR node for forwarding within the on duration of the second target on window, the NR node may indicate to deactivate the second target on window in advance (in other words, stop forwarding in advance). For example, in FIG. 4, the NCR node closes a current on window in advance after receiving the second indication signal.

In another possible implementation, when on duration of an on window ends, the NCR node may further need to be scheduled to continue to forward a signal. To avoid frequent switching of a state of the NCR node, the network-side device may indicate the NCR node to extend the on duration of the on window. Therefore, in this possible implementation, after the network-side device sends the at least one piece of on-off state configuration information to the NCR node, the method further includes: sending a third indication signal to the NCR node within the on duration of the second target on window configured by the on-off state configuration information, where the third indication signal is used for indicating the NCR node to extend the on duration of the second target on window. For example, when the gNB determines that the NCR node further needs to be scheduled for forwarding after the on duration of the second target on window, the gNB indicates the NCR node to delay deactivation (in other words, delay ending) of the second target on window. After receiving the indication, the NCR node extends the on duration of the on window. The third indication signal may include indication information that indicates delay time.

In this embodiment of this application, the network-side device may configure a plurality of pieces of on-off state configuration information for one NCR node. For example, different on-off state configuration information is set for different purposes.

In this embodiment of this application, the NCR node may forward a variety of signals, for example, control information such as a synchronization signal, broadcast information, paging (paging), a physical uplink control channel (Physical Uplink Control Channel, PUCCH), and a physical random access channel (Physical Random Access Channel, PRACH), and uplink and downlink service data information. Forwarding of these signals has different semi-persistent configuration requirements. Therefore, the network-side device may configure different on-off state configuration information for different signals forwarded by the NCR node. Therefore, in a possible implementation, the on-off state configuration information may further include indication information for indicating a purpose of the on-off state configuration information, for example, being used for PRACH forwarding, or being used for SSB and/or CSI-RS forwarding.

For example, the purpose indication information may indicate that the on-off state configuration information is used for forwarding of different signals, including but not limited to:
(1) forwarding of a broadcast signal, such as an SSB, a CSI-RS, and paging information;
(2) forwarding of an uplink PRACH signal;
(3) forwarding of uplink user data; and
(4) forwarding of downlink user data.

In addition, different signals may have different forwarding priorities. Therefore, the on-off state configuration information may further include indication information for indicating a priority of the on-off state configuration information.

Only one of the plurality of pieces of on-off state configuration information is allowed to be activated at the same time. In other words, only one piece of on-off state configuration information is allowed to be activated at a time. When receiving an activation command for new on-off state configuration information, the NCR node deactivates previously activated on-off state configuration information, and activates the new on-off state configuration information, to avoid confusion of the NCR node.

In another possible implementation, a plurality of pieces of on-off state configuration information may alternatively be allowed to be activated at the same time. For example, a plurality of pieces of on-off state configuration information that can be activated at the same time may be agreed upon in a protocol. For example, it may be agreed upon in the protocol that an on-off configuration activated by signaling and an on-off configuration that is in an active state by default can coexist, on-off configurations for different purposes can be activated at the same time, or on-off configurations with different priorities can coexist.

If a plurality of semi-persistent on-off configurations are activated, the NCR node may be in the on state within all on duration (namely, a union) of the plurality of on-off configurations, or the NCR may be in the on state at an intersection position (namely, an intersection) of on duration of the plurality of on-off configurations. The plurality of on-off configurations that are activated may be predefined, preconfigured, or configured configurations, or configurations other than on-off configurations used for forwarding broadcast signals.

In this embodiment of this application, the network-side device may alternatively activate or deactivate one or more pieces of on-off state configuration information by using an operation command. Therefore, in a possible implementation, after S210, the method may further include: The network-side device sends an operation command to the NCR node, where the operation command is used for activating or deactivating one or more of the at least one piece of on-off state configuration information. For example, the network-side device may determine, based on a type of a to-be-forwarded signal, on-off state configuration information to be activated, and send a corresponding operation command. In this possible implementation, on-off state configuration information can be activated or deactivated on demand.

In a possible implementation, the network-side device may add, to the operation command, an identifier of one or more pieces of on-off state configuration information to be activated or deactivated; or the network-side device may add, to the operation command, a bitmap corresponding to the at least one piece of on-off state configuration information, and a bit in the bitmap is used for indicating to activate or deactivate corresponding on-off state configuration information in the at least one piece of on-off state configuration information. For example, the network-side device has configured four pieces of on-off state configuration information with sequence numbers of 0, 1, 2, and 3. If the network-side device needs to activate 0 and 2, the network-side device may add 0 and 2 to the activation command, or the network-side device may send a bitmap 1010, where each bit corresponds to one piece of on-off state configuration information. A value of a corresponding bit being 1 indicates to activate corresponding on-off state configuration information. A value of a corresponding bit being 0 indicates not to activate corresponding on-off state configuration information.

In another possible implementation, the network-side device may alternatively send a plurality of operation commands, and one operation command is used for activating or deactivating one piece of on-off state configuration information.

For example, a base station may configure a plurality of semi-persistent on-off configurations for one NCR node, and then activate or deactivate one or more of the semi-persistent on-off configurations by using an activation indication. For example, one or more semi-persistent on-off configurations may be activated or deactivated by using one command; or a plurality of commands may be used, where each command is used for activating or deactivating one semi-persistent configuration. In the foregoing two activation/deactivation manners, a sequence number of a semi-persistent on-off configuration or a bitmap corresponding to the sequence number may be used for indication.

In this embodiment of this application, in addition to the manner of controlling activation or deactivation of on-off state configuration information by using operation signaling, a manner of setting on-off state configuration information to be in an activate state by default may also be used. For example, a time period in which forwarding of broadcast signals (including at least one or more of an SSB, a PRACH, a CORESET#0, a periodic (Periodic) CSI-RS, paging, and a system information block (System Information Block, SIB)) is enabled by default is set, including a starting slot/symbol sequence number and an ending slot/symbol sequence number of the time period, and a period in which the time period appears.

In this embodiment of this application, the network-side device may activate on-off state configuration information by itself, or may activate corresponding on-off state configuration information based on expected on-off state configuration information of the NCR node. For example, the NCR node may report the expected on-off state configuration information, and the network-side device may activate corresponding on-off state configuration information. Alternatively, the NCR node may determine activated (enabled) on-off state configuration information and report the enabled on-off state configuration information. When a plurality of parent nodes (parent nodes) exist, the NCR-MT may perform on-off pattern (pattern) coordination. For example, the NCR node cannot enter the off state if a parent integrated access and backhaul, (Integrated Access and Backhaul, IAB) node needs to use the NCR for forwarding. The NCR node may enter the off state when two NCR nodes indicate the NCR to enter the off state.

In a possible implementation, after the network-side device sends the operation command to the NCR node, the method further includes: The network-side device receives acknowledgement information sent by the NCR node, where the acknowledgement information is used for indicating an activation status of some or all of the at least one piece of on-off state configuration information. In this possible implementation, the NCR node may synchronize an activation status of some or all of on-off state configuration information with the network-side device, so that the network-side device and the NCR node have consistent understanding. This facilitates signal forwarding through the NCR node.

FIG. 5 is another schematic flowchart of an on-off state configuration method for an NCR node according to an embodiment of this application. The method 500 may be performed by an NCR node. In other words, the method may be performed by software or hardware installed on the NCR node. The method 500 is a step process that is performed by the NCR node and that corresponds to the method 200, and has implementations corresponding to the possible implementations of the method 200. For details, refer to the descriptions in the method 200. As shown in FIG. 5, the method may include the following steps.

S510: The NCR node receives at least one piece of on-off state configuration information sent by a network-side device.

In this embodiment of this application, the on-off state configuration information is used for configuring an on-off state of the NCR node, the on-off state configuration information includes a period parameter for indicating a switching period of an on-off state and an on window parameter for indicating a time period of an on state, and the on window parameter includes at least one of the following: a time offset and a window length of an on window.

The at least one piece of on-off state configuration information is the same as the at least one piece of on-off state configuration information in the method 200. For details, refer to the descriptions in the method 200. Details are not described herein again.

In addition, the network-side device may send the at least one piece of on-off state configuration information as described in the method 200. For details, refer to the descriptions in the method 200.

In a possible implementation, in correspondence with the method 200, the NCR node receives, in one of the following manners, the on-off state configuration information sent by the network-side device.

Manner 1: The NCR node receives the on-off state configuration information sent by the network-side device through RRC signaling.

Manner 2: The NCR node receives a part of configuration parameters in the on-off state configuration information that are sent by the network-side device through first signaling, and receives the other part of configuration parameters in the on-off state configuration information that are sent through second signaling, where the first signaling includes RRC signaling, and the second signaling includes MAC CE signaling or PDCCH signaling.

In this embodiment of this application, as shown in FIG. 5, after S510, the method may further include the following step: S512: The NCR node may activate one or more of the at least one piece of on-off state configuration information.

For example, in a possible implementation, if the NCR node receives on-off state configuration information in the foregoing manner 1, after the NCR node receives the on-off state configuration information sent by the network-side device through the RRC signaling, the NCR node activates the on-off state configuration information.

For another example, in a possible implementation, if the NCR node receives on-off state configuration information in the foregoing manner 2, the NCR node sets the on-off state configuration information to an inactive state after the NCR node receives the part of configuration parameters in the on-off state configuration information that are sent by the network-side device through the first signaling, and the NCR node activates the on-off state configuration information after receiving the second signaling.

Alternatively, after receiving the at least one piece of on-off state configuration information, the NCR node may activate default on-off state configuration information in the at least one piece of on-off state configuration information, for example, activate on-off state configuration information for forwarding a broadcast signal.

Alternatively, the NCR node may activate one or more pieces of on-off state configuration information according to an operation command sent by the network-side device.

After the NCR node activates one or more pieces of on-off state configuration information, the NCR node may further receive a release command sent by the network-side device. Therefore, in a possible implementation, after the NCR node activates the on-off state configuration information, the method may further include: The NCR node receives a release command for the on-off state configuration information; releases the on-off state configuration information after deactivating the on-off state configuration information, for example, setting the on-off state configuration information to be invalid, and/or deleting the on-off state configuration information; and adjusting a sequence number of remaining on-off state configuration information.

In a possible implementation of this embodiment of this application, the network-side device may configure a plurality of pieces of on-off state configuration information for one NCR node, for example, configure different on-off state configuration information for different purposes.

In a possible implementation, the on-off state configuration information further includes at least one of the following: indication information for indicating a purpose of the on-off state configuration information, and indication information for indicating a priority of the on-off state configuration information. In this possible implementation, the NCR node may obtain a purpose and/or a priority of each piece of on-off state configuration information, and therefore may determine on-off state configuration information to be used when on windows of different on-off state configuration information overlap.

In this embodiment of this application, the plurality of pieces of on-off state configuration information may be activated at the same time, or only one piece of on-off state configuration information can be activated, for example, previously activated on-off state configuration information is replaced with on-off state configuration information activated later, to avoid confusion of an activation indication on the NCR node.

In addition, on-off state configuration information that can be activated at the same time may be further agreed upon in a protocol. For example, on-off state configuration information activated by signaling and on-off state configuration information that is in an active state by default can coexist, on-off state configuration information for different purposes can be activated at the same time, or on-off state configuration information with different priorities can coexist.

In a possible implementation, the network-side device may activate one or more of the at least one piece of on-off state configuration information by using an operation command. Therefore, in this possible implementation, after the NCR node receives the at least one piece of on-off state configuration information sent by the network-side device, the method further includes the following steps.

Step 1: The NCR node receives an operation command sent by the network-side device, where the operation command is used for activating or deactivating one or more of the at least one piece of on-off state configuration information.

Step 2: The NCR node activates or deactivates, according to the operation command, one or more of the at least one piece of on-off state configuration information.

For example, the network-side device activates or deactivates one or more pieces of on-off state configuration information by using one operation command; or a plurality of operation commands may be used, where each operation command is used for activating or deactivating one semi-persistent configuration. In the foregoing two activation/deactivation manners, on-off state configuration information to be activated or deactivated may be indicated by a sequence number of a semi-persistent on-off configuration or a bitmap corresponding to the sequence number. To be specific, the operation command may include an identifier of one or more pieces of on-off state configuration information to be activated or deactivated; or the operation command may include a bitmap corresponding to the at least one piece of on-off state configuration information, and a bit in the bitmap is used for indicating to activate or deactivate corresponding on-off state configuration information in the at least one piece of on-off state configuration information. For details, refer to related descriptions in the method 200.

In the foregoing possible implementation, optionally, the operation command may further include a configuration parameter. When target on-off state configuration information to be activated by the operation command is currently in an active state, after receiving the operation command, the NCR node reactivates the target on-off state configuration information based on the configuration parameter carried in the operation command.

In a possible implementation, after the NCR node activates or deactivates, according to the operation command, one or more of the at least one piece of on-off state configuration information, the method further includes: The NCR node sends acknowledgement information, where the acknowledgement information is used for indicating an activation status of some or all of the at least one piece of on-off state configuration information. In this possible implementation, an activation status of some or all of on-off state configuration information may be synchronized between the NCR node and the network-side device, so that the NCR node and the network-side device have consistent understanding.

In a possible implementation, after the NCR node activates or deactivates, according to the operation command, one or more of the at least one piece of on-off state configuration information, when a plurality of pieces of on-off state configuration information are in an active state, the NCR node determines to be in the on state in all on windows configured by the plurality of pieces of active on-off state configuration information, or the NCR node determines to be in the on state within a target time period, where the target time period is a time period in which the NCR node is configured by all the plurality of pieces of active on-off state configuration information to be in the on state. To be specific, if a plurality of pieces of on-off state configuration information are activated, the NCR is in the on state in the on windows (namely, a union) configured by the plurality of pieces of on-off state configuration information, or the NCR is in the on state at an intersection position (namely, an intersection) of the on windows configured by the plurality of pieces of on-off state configuration information. The plurality of pieces of on-off state configuration information that are activated may be predefined, preconfigured, or configured configurations, or on-off state configuration information other than on-off state configuration information used for forwarding broadcast signals.

To be specific, when a plurality of pieces of on-off state configuration information are in an active state, for a specific slot/symbol of a specific carrier, the slot/symbol is in a forwarding enabled state if it is determined, based on any on window in an active state, that the slot/symbol is in the forwarding enabled state. Alternatively, when a plurality of pieces of on-off state configuration information are in an active state, for a specific slot/symbol of a specific carrier, it is determined that the slot/symbol is in a forwarding enabled state only if it is determined, based on a plurality of activated on windows, that the slot/symbol is in the forwarding enabled state.

In a possible implementation, after the NCR node activates or deactivates, according to the operation command, one or more of the at least one piece of on-off state configuration information, the method further includes: performing, by the NCR node, signal forwarding in a target time unit, where the target time unit is located in an on window configured by one or more pieces of active on-off state configuration information.

Optionally, when the target time unit is located in on windows configured by a plurality of pieces of active on-off state configuration information, the NCR node performs signal forwarding in the target time unit based on target on-off state configuration information, where the target on-off state configuration information is any one of the plurality of pieces of active on-off state configuration information.

Alternatively, when the target time unit is located in on windows configured by a plurality of pieces of active on-off state configuration information, the NCR node determines, based on purposes and/or priorities of the plurality of pieces of active on-off state configuration information, target on-off state configuration information to be used in the target time unit, and performs signal forwarding in the target time unit based on the target on-off configuration information, where the target on-off state configuration information is one of the plurality of pieces of on-off state configuration information in the active state.

For example, when on windows of a plurality of semi-persistent on-off configurations are in an active state at the same time, different semi-persistent on-off configurations are used for forwarding different signals, including but not limited to:
forwarding of a broadcast signal, such as an SSB, a CSI-RS, and paging information;
forwarding of an uplink PRACH signal;
forwarding of uplink user data; and
forwarding of downlink user data.

If the forwarding of the broadcast signal should take precedence, it is determined that a semi-persistent on-off configuration used for forwarding broadcast signals is to be used for signal forwarding.

In a possible implementation, that the NCR node performs signal forwarding in the target time unit based on the target on-off configuration information includes one of the following:
when the target on-off state configuration information includes configuration information of a forwarding beam, the NCR node performs signal forwarding in the target time unit by using a beam corresponding to the configuration information of the forwarding beam, where the forwarding beam includes an uplink beam or a downlink beam; or
when the target on-off state configuration information includes configuration information of a forwarding beam and a dynamic beam indication for the target time unit is received, the NCR node performs signal forwarding in the target time unit by using a beam corresponding to the dynamic beam indication.

To be specific, if a semi-persistent on-off configuration includes a preconfigured beam parameter indication, forwarding is performed based on the beam indication; if a slot/symbol is in an on window of a semi-persistent on-off configuration, the semi-persistent on-off configuration provides a preconfigured beam parameter, and a dynamic beam indication for the slot/symbol is also received, forwarding is performed in the slot/symbol based on the dynamic beam indication; or if a slot/symbol is in an on window of a semi-persistent on-off configuration, the semi-persistent on-off configuration provides no preconfigured beam parameter, and the NCR node receives no dynamic beam indication for the slot/symbol, the NCR node does not perform forwarding in the slot/symbol.

In a possible implementation, after the NCR node receives the at least one piece of on-off state configuration information sent by the network-side device, the method further includes: When receiving a first indication signal in an indication window corresponding to a first target on window configured by the on-off state configuration information, the NCR node activates the first target on window, where the first indication signal is used for indicating to activate the first target on window. In this possible implementation, the NCR node may determine, according to a requirement of the network-side device, whether to activate a configured on window. This can further reduce unnecessary interference caused by the NCR node and reduce power consumption of the NCR node.

In a possible implementation, that the NCR node activates the first target on window includes one of the following:
(1) The NCR node activates the first target on window at an expected enabling position configured by the network-side device. In other words, the NCR node determines an activation position of the first target on window based on a configuration of the network-side device.
(2) The NCR node activates the first target on window based on a window length of the first target on window that is configured by the on-off state configuration information. In other words, the NCR node determines an activation position of the first target on window based on on-off state configuration information configured by the network-side device.

In a possible implementation, before the NCR node receives the first indication signal in the indication window corresponding to the first target on window configured by the on-off state configuration information, the method further includes: The NCR node receives indication window configuration information sent by the network-side device, where the indication window configuration information includes configuration information of an indication window corresponding to an on window configured by the on-off state configuration information. In this possible implementation, the network-side device configures a periodic indication window.

In a possible implementation, after the NCR node receives the at least one piece of on-off state configuration information sent by the network-side device, the method may further include: When receiving a second indication signal sent by the network-side device within on duration of a second target on window configured by the on-off state configuration information, the NCR node closes the second target on window, where the second indication signal is used for indicating the NCR node to close the second target on window.

For example, after the NCR node activates one piece of on-off state configuration information and a second target on window configured by the on-off state configuration information is activated (the second target on window configured by the on-off state configuration information may be automatically activated after the on-off state configuration information is activated, or the network-side device may send indication information in an indication window corresponding to the second target on window to activate the second target on window), the network-side device sends the second indication signal during on duration of the second target on window to indicate the NCR node to close the second target on window. In this case, the NCR node may close the second target on window in advance, to further reduce interference and save power.

In a possible implementation, after the NCR node receives the at least one piece of on-off state configuration information sent by the network-side device, the method may further include: When receiving a third indication signal sent by the network-side device within the on duration of the second target on window, the NCR node extends the on duration of the second target on window, where the third indication signal is used for indicating the NCR node to extend the on duration of the second target on window.

In the foregoing technical solutions provided in the embodiments of this application, on-off state configuration information may be configured in a differentiated manner to meet different requirements of NCR nodes.

The on-off state configuration method for an NCR node in the embodiments of this application may be performed by an on-off state configuration apparatus for an NCR node. In the embodiments of this application, an on-off state configuration apparatus for an NCR node in the embodiments of this application is described by using an example in which the on-off state configuration apparatus for an NCR node performs the on-off state configuration method for an NCR node.

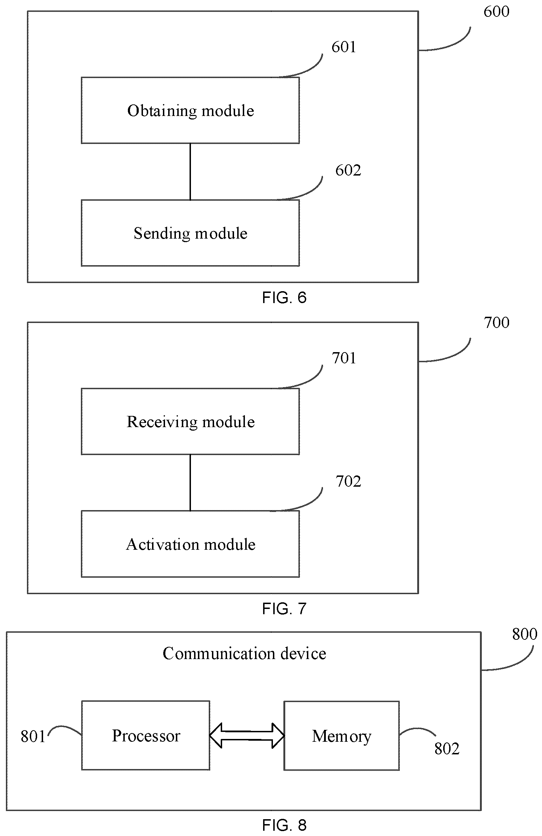

FIG. 6 is a schematic structural diagram of an on-off state configuration apparatus for an NCR node according to an embodiment of this application. As shown in FIG. 6, the apparatus 600 mainly includes an obtaining module 601 and a sending module 602.

In this embodiment of this application, the obtaining module 601 is configured to obtain at least one piece of on-off state configuration information for an NCR node, where the on-off state configuration information is used for configuring an on-off state of the NCR node, the on-off state configuration information includes a period parameter for indicating a switching period of an on-off state and an on window parameter for indicating a time period of an on state, and the on window parameter includes at least one of the following: a time offset and a window length of an on window. The sending module 602 is configured to send the at least one piece of on-off state configuration information to the NCR node.

In a possible implementation, the on-off state configuration information further includes at least one of the following:
configuration information of an uplink beam of an access link, where the access link is a radio link between the NCR node and a terminal;
configuration information of a downlink beam of the access link;
configuration information of an uplink beam of a backhaul link, where the backhaul link is a radio signal path between the network-side device and the NCR node;
configuration information of a downlink beam of the backhaul link;
configuration information of forwarding power of the NCR node;
sending/receiving configuration information of side control information corresponding to the on-off state;
time-frequency resource configuration information;
a forwarding direction in the on state;
indication information for a forwarding enabling mode in the on window; and
identification information of the on-off state configuration information.

In a possible implementation, the configuration information of the forwarding power includes at least one of the following:
maximum uplink forwarding power;
maximum uplink forwarding power spectral density;
maximum downlink forwarding power;
maximum downlink forwarding power spectral density;
minimum uplink forwarding power;
minimum uplink forwarding power spectral density;
minimum downlink forwarding power;
minimum downlink forwarding power spectral density;
maximum magnification of the NCR node for forwarding a signal in uplink;
minimum magnification of the NCR node for forwarding a signal in uplink;
maximum magnification of the NCR node for forwarding a signal in downlink;
minimum magnification of the NCR node for forwarding a signal in downlink;
first indication information, where the first indication information indicates the NCR node to use a power control ring, or the first indication information indicates the NCR node not to use a power control ring;
second indication information, where the second indication information is used for indicating fixed target forwarding power of the NCR node for uplink forwarding or downlink forwarding;
third indication information, where the third indication information is used for indicating fixed target forwarding power spectral density of the NCR node for uplink forwarding or downlink forwarding;
fixed power magnification of the NCR node for uplink forwarding in the on state;
fixed power magnification of the NCR node for downlink forwarding in the on state;
a power value of the NCR node in an off state; and
power magnification of the NCR node in the off state.

In a possible implementation, the sending/receiving configuration information of the side control information includes at least one of the following:
a format configuration of a physical downlink control channel PDCCH for receiving side control information;
a search resource configuration of the PDCCH for receiving the side control information;
a detection position configuration of the PDCCH for receiving the side control information;
a configuration of a control resource set CORSET for receiving side control information; and
a configuration of a radio network temporary identifier RNTI for receiving side control information.

In a possible implementation, the forwarding direction includes at least one of the following: uplink forwarding and downlink forwarding.

In a possible implementation, the indication information for the forwarding enabling mode in the on window is used for indicating one of the following: forwarding is always enabled in the on window, or forwarding is enabled when side control information is received in the on window.

In a possible implementation, that the sending module 602 sends the on-off state configuration information includes one of the following:
sending the on-off state configuration information to the NCR node through radio resource control RRC signaling; or
sending a part of configuration parameters in the on-off state configuration information to the NCR node through first signaling, and sending the other part of configuration parameters in the on-off state configuration information to the NCR node through second signaling, where the first signaling includes RRC signaling, and the second signaling includes Medium Access Control MAC control element CE signaling or PDCCH signaling.

In a possible implementation, the second signaling is further used for activating the on-off state configuration information.

In a possible implementation, the sending module 602 is further configured to send release signaling to the NCR node, where the release signaling is used for releasing the on-off state configuration information.

In a possible implementation, the sending module 602 is further configured to: when a first target on window configured by the on-off state configuration information needs to be activated, send, to the NCR node in an indication window corresponding to the first target on window, a first indication signal for indicating to activate the first target on window.

In a possible implementation,
the indication window is located before the first target on window; or
the indication window is located in the first target on window, and is located in the front of the first target on window; or
a part of the indication window is located before the first target on window, and the other part is located in the front of the first target on window.

In a possible implementation, the sending module 602 is further configured to send indication window configuration information to the NCR node, where the indication window configuration information includes configuration information of an indication window corresponding to an on window configured by the on-off state configuration information.

In a possible implementation, the indication window configuration information includes at least one of the following:
a time offset of the indication window;
a window length of the indication window;
a period of the indication window;
a format of downlink control information DCI carrying the first indication signal;
an RNTI corresponding to the DCI;
a time-frequency position at which the DCI is to be received; and
a period of the DCI.

In a possible implementation, the sending module 602 is further configured to perform at least one of the following:
sending a second indication signal to the NCR node within on duration of a second target on window configured by the on-off state configuration information, where the second indication signal is used for indicating the NCR node to close the second target on window; and
sending a third indication signal to the NCR node within the on duration of the second target on window configured by the on-off state configuration information, where the third indication signal is used for indicating the NCR node to extend the on duration of the second target on window.

In a possible implementation, a plurality of pieces of on-off state configuration information in at least one piece of on-off state configuration information are allowed to be in an active state at the same time.

In a possible implementation, the plurality of pieces of on-off state configuration information allowed to be in the active state at the same time are agreed upon in a protocol.

In a possible implementation, any two of a plurality of pieces of on-off state configuration information are not allowed to be in an active state at the same time.

In a possible implementation, the on-off state configuration information further includes at least one of the following: indication information for indicating a purpose of the on-off state configuration information, and indication information for indicating a priority of the on-off state configuration information.

In a possible implementation, the sending module 602 is further configured to send an operation command to the NCR node, where the operation command is used for activating or deactivating one or more of the at least one piece of on-off state configuration information.

In a possible implementation, the operation command includes an identifier of one or more pieces of on-off state configuration information to be activated or deactivated; or the operation command includes a bitmap corresponding to the at least one piece of on-off state configuration information, and a bit in the bitmap is used for indicating to activate or deactivate corresponding on-off state configuration information in the at least one piece of on-off state configuration information.

In a possible implementation, there are a plurality of operation commands, and one operation command is used for activating or deactivating one piece of on-off state configuration information.

In a possible implementation, the apparatus further includes: a receiving module, configured to receive acknowledgement information sent by the NCR node, where the acknowledgement information is used for indicating an activation status of some or all of the at least one piece of on-off state configuration information.

FIG. 7 is another schematic structural diagram of an on-off state configuration apparatus for an NCR node according to an embodiment of this application. As shown in FIG. 7, the apparatus 700 mainly includes a receiving module 701 and an activation module 702.

The receiving module 701 is configured to receive at least one piece of on-off state configuration information sent by a network-side device, where the on-off state configuration information is used for configuring an on-off state of an NCR node, the on-off state configuration information includes a period parameter for indicating a switching period of an on-off state and an on window parameter for indicating a time period of an on state, and the on window parameter includes at least one of the following: a time offset and a window length of an on window. The activation module 702 is configured to activate one or more of the at least one piece of on-off state configuration information based on the at least one piece of on-off state configuration information.

In a possible implementation, the on-off state configuration information further includes at least one of the following:
configuration information of an uplink beam of an access link, where the access link is a link between the NCR node and a terminal;
configuration information of a downlink beam of the access link;
configuration information of an uplink beam of a backhaul link, where the backhaul link is a radio signal path between the network-side device and the NCR node;
configuration information of a downlink beam of the backhaul link;
configuration information of forwarding power of the NCR node;
sending/receiving configuration information of side control information corresponding to the on-off state;
time-frequency resource information;
a forwarding direction in the on state;
indication information for a forwarding enabling mode in the on window; and
identification information of the on-off state configuration information.

In a possible implementation, the configuration information of the forwarding power includes at least one of the following:
maximum uplink forwarding power;
maximum uplink forwarding power spectral density;
maximum downlink forwarding power;
maximum downlink forwarding power spectral density;
minimum uplink forwarding power;
minimum uplink forwarding power spectral density;
minimum downlink forwarding power;
minimum downlink forwarding power spectral density;
maximum magnification of the NCR node for forwarding a signal in uplink;
minimum magnification of the NCR node for forwarding a signal in uplink;
maximum magnification of the NCR node for forwarding a signal in downlink;
minimum magnification of the NCR node for forwarding a signal in downlink;
first indication information, where the first indication information indicates the NCR node to use a power control ring, or the first indication information indicates the NCR node not to use a power control ring;
second indication information, where the second indication information is used for indicating fixed target forwarding power of the NCR node for uplink forwarding or downlink forwarding;
third indication information, where the third indication information is used for indicating fixed target forwarding power spectral density of the NCR node for uplink forwarding or downlink forwarding;
fixed power magnification of the NCR node for uplink forwarding in the on state;
fixed power magnification of the NCR node for downlink forwarding in the on state;
a power value of the NCR node in an off state; and
power magnification of the NCR node in the off state.

In a possible implementation, the sending/receiving configuration information of the side control information includes at least one of the following:
a format configuration of a physical downlink control channel PDCCH for receiving side control information;
a search resource configuration of the PDCCH for receiving the side control information;
a detection position configuration of the PDCCH for receiving the side control information;
a configuration of a control resource set CORSET for receiving side control information; and
a configuration of a radio network temporary identifier RNTI for receiving side control information.

In a possible implementation, the forwarding direction includes at least one of the following: uplink forwarding and downlink forwarding.

In a possible implementation, the indication information for the forwarding enabling mode in the on window is used for indicating one of the following: forwarding is always enabled in the on window, or forwarding is enabled when control side control information is received in the on window.

In a possible implementation, that the receiving module 701 receives the on-off state configuration information sent by the network-side device includes one of the following:
receiving the on-off state configuration information sent by the network-side device through RRC signaling; or
receiving a part of configuration parameters in the on-off state configuration information that are sent by the network-side device through first signaling, and receiving the other part of configuration parameters in the on-off state configuration information that are sent through second signaling, where the first signaling includes RRC signaling, and the second signaling includes MAC CE signaling or PDCCH signaling.

In a possible implementation, the activation module 702 is configured to activate the on-off state configuration information after the on-off state configuration information sent by the network-side device through the RRC signaling is received.

In a possible implementation, the activation module 702 is further configured to: set the on-off state configuration information to an inactive state after the part of configuration parameters in the on-off state configuration information that are sent by the network-side device through the first signaling are received, and activate, for the NCR node, the on-off state configuration information after the second signaling is received.

In a possible implementation, the activation module 702 is further configured to: after a release command for the on-off state configuration information is received, release the on-off state configuration information after deactivating the on-off state configuration information.

In a possible implementation, the activation module 702 is further configured to: when a first indication signal is received in an indication window corresponding to a first target on window configured by the on-off state configuration information, activate the first target on window, where the first indication signal is used for indicating to activate the first target on window.

In a possible implementation, that the activation module 702 activates the first target on window includes one of the following:
activating the first target on window at an expected enabling position configured by the network-side device; or
activating the first target on window based on a window length of the first target on window that is configured by the on-off state configuration information.

In a possible implementation, the receiving module 701 is further configured to receive indication window configuration information sent by the network-side device, where the indication window configuration information includes configuration information of an indication window corresponding to an on window configured by the on-off state configuration information.

In a possible implementation, the activation module 702 is further configured to perform one of the following:
when a second indication signal sent by the network-side device is received within on duration of a second target on window configured by the on-off state configuration information, closing the second target on window, where the second indication signal is used for indicating the NCR node to close the second target on window; or
when a third indication signal sent by the network-side device is received within the on duration of the second target on window, extending the on duration of the second target on window, where the third indication signal is used for indicating the NCR node to extend the on duration of the second target on window.

In a possible implementation, the on-off state configuration information further includes at least one of the following: indication information for indicating a purpose of the on-off state configuration information, and indication information for indicating a priority of the on-off state configuration information.

In a possible implementation, the receiving module 701 is further configured to receive an operation command sent by the network-side device, where the operation command is used for activating or deactivating one or more of the at least one piece of on-off state configuration information; and the activation module 702 is further configured to activate or deactivate, according to the operation command, one or more of the at least one piece of on-off state configuration information.

In a possible implementation, the operation command includes an identifier of one or more pieces of on-off state configuration information to be activated or deactivated; or the operation command includes a bitmap corresponding to the at least one piece of on-off state configuration information, and a bit in the bitmap is used for indicating to activate or deactivate corresponding on-off state configuration information in the at least one piece of on-off state configuration information.

In a possible implementation, there are a plurality of operation commands, and one operation command is used for activating or deactivating one piece of on-off state configuration information.

In a possible implementation, that the activation module 702 activates or deactivates, according to the operation command, one or more of the at least one piece of on-off state configuration information includes:
when target on-off state configuration information in the at least one piece of on-off state configuration information is in an active state and the operation command indicates to activate the target on-off state configuration information, reactivating the target on-off state configuration information based on a configuration parameter carried in the operation command.

In a possible implementation, the apparatus further includes: a sending module, configured to send acknowledgement information, where the acknowledgement information is used for indicating an activation status of some or all of the at least one piece of on-off state configuration information.

In a possible implementation, the apparatus further includes: a determining module, configured to: when a plurality of pieces of on-off state configuration information are in an active state, determine to be in the on state in all on windows configured by the plurality of pieces of active on-off state configuration information, or determine to be in the on state within a target time period, where the target time period is a time period in which the NCR node is configured by all the plurality of pieces of active on-off state configuration information to be in the on state.

In a possible implementation, the apparatus further includes: a forwarding module, configured to perform signal forwarding in a target time unit, where the target time unit is located in an on window configured by one or more pieces of active on-off state configuration information.

In a possible implementation, that the forwarding module performs signal forwarding in the target time unit includes:
when the target time unit is located in on windows configured by a plurality of pieces of active on-off state configuration information, performing signal forwarding in the target time unit based on target on-off state configuration information, where the target on-off state configuration information is any one of the plurality of pieces of active on-off state configuration information; or
when the target time unit is located in on windows configured by a plurality of pieces of active on-off state configuration information, determining, based on purposes and/or priorities of the plurality of pieces of active on-off state configuration information, target on-off state configuration information to be used in the target time unit, and performing signal forwarding in the target time unit based on the target on-off configuration information, where the target on-off state configuration information is one of the plurality of pieces of on-off state configuration information in the active state.

In a possible implementation, that the forwarding module performs signal forwarding in the target time unit based on the target on-off configuration information includes one of the following:
when the target on-off state configuration information includes configuration information of a forwarding beam, performing signal forwarding in the target time unit by using a beam corresponding to the configuration information of the forwarding beam, where the forwarding beam includes an uplink beam or a downlink beam; or
when the target on-off state configuration information includes configuration information of a forwarding beam and a dynamic beam indication for the target time unit is received, performing signal forwarding in the target time unit by using a beam corresponding to the dynamic beam indication.

The on-off state configuration apparatus for an NCR node in this embodiment of this application may be an electronic device, for example, an electronic device with an operating system; or may be a component in an electronic device, for example, an integrated circuit or a chip. The electronic device may be a network-side device or an NCR node. The network-side device may include but is not limited to the foregoing network-side device 12.

The on-off state configuration apparatus for an NCR node in this embodiment of this application is capable of implementing the processes implemented in the method embodiments of FIG. 2 to FIG. 5, with the same technical effect achieved. To avoid repetition, details are not described herein again.

Optionally, as shown in FIG. 8, an embodiment of this application further provides a communication device 800, including a processor 801 and a memory 802. The memory 802 stores a program or instructions capable of running on the processor 801. For example, in a case that the communication device 800 is a network-side device, when the program or instructions are executed by the processor 801, the steps in the embodiment of the on-off state configuration method 200 for an NCR node are implemented, with the same technical effect achieved. In a case that the communication device 800 is an NCR node, when the program or instructions are executed by the processor 801, the steps in the embodiment of the on-off state configuration method 500 for an NCR node are implemented, with the same technical effect achieved. To avoid repetition, details are not described herein again.

An embodiment of this application further provides a network-side device, including a processor and a communication interface. The processor is configured to implement the processes in the embodiment of the on-off state configuration method 200 for an NCR node. The communication interface is configured to communicate with an external device. The network-side device embodiment corresponds to the foregoing method embodiment for the network-side device, and all implementation processes and implementations of the foregoing method embodiment are applicable to the network-side device embodiment, with the same technical effect achieved.

An embodiment of this application further provides an NCR node, including a processor and a communication interface. The processor is configured to implement the processes in the embodiment of the on-off state configuration method 500 for an NCR node. The communication interface is configured to communicate with an external device. The NCR node embodiment corresponds to the foregoing method embodiment for the NCR node, and all implementation processes and implementations of the foregoing method embodiments are applicable to the NCR node embodiment, with the same technical effect achieved.

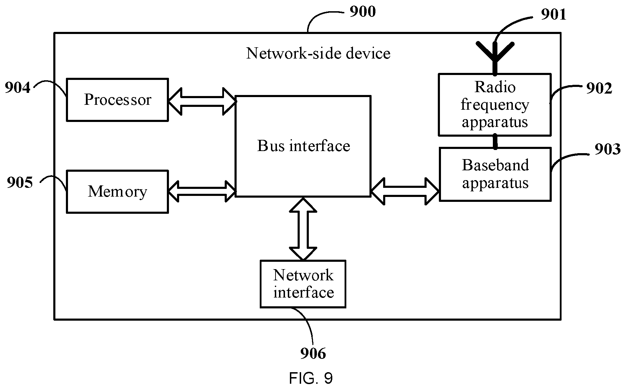

Specifically, an embodiment of this application further provides a network-side device. As shown in FIG. 9, the network-side device 900 includes an antenna 901, a radio frequency apparatus 902, a baseband apparatus 903, a processor 904, and a memory 905. The antenna 901 is connected to the radio frequency apparatus 902. In an uplink direction, the radio frequency apparatus 902 receives information through the antenna 901, and sends the received information to the baseband apparatus 903 for processing. In a downlink direction, the baseband apparatus 903 processes to-be-sent information, and sends the information to the radio frequency apparatus 902; and the radio frequency apparatus 902 processes the received information and then sends the information through the antenna 901.

The method performed by the network-side device in the foregoing embodiments may be implemented in the baseband apparatus 903, and the baseband apparatus 903 includes a baseband processor.

The baseband apparatus 903 may include, for example, at least one baseband board, where a plurality of chips are disposed on the baseband board. As shown in FIG. 9, one of the chips is, for example, the baseband processor, which is connected to the memory 905 through a bus interface, to invoke a program in the memory 905 to perform the operations of the network device shown in the foregoing method embodiments.

The network-side device may further include a network interface 906. The interface is, for example, a common public radio interface (common public radio interface, CPRI).

Specifically, the network-side device 900 in this embodiment of the present invention further includes instructions or a program stored in the memory 905 and capable of running on the processor 904, and the processor 904 invokes the instructions or program in the memory 905 to perform the method performed by the modules shown in FIG. 6 or perform the method performed by the modules shown in FIG. 7, with the same technical effect achieved. To avoid repetition, details are not described herein again.

An embodiment of this application further provides a readable storage medium. The readable storage medium stores a program or instructions. When the program or instructions are executed by a processor, the processes in the embodiment of the on-off state configuration method 200 for an NCR node are implemented, or the processes in the embodiment of the on-off state configuration method 500 for an NCR node are implemented, with the same technical effect achieved. To avoid repetition, details are not described herein again.

The processor is a processor in the terminal in the foregoing embodiments. The readable storage medium includes a computer-readable storage medium, for example, a computer read-only memory ROM, a random access memory RAM, a magnetic disk, or a compact disc.

An embodiment of this application further provides a chip. The chip includes a processor and a communication interface. The communication interface is coupled to the processor. The processor is configured to run a program or instructions, to implement the processes in the embodiment of the on-off state configuration method 200 for an NCR node, or implement the processes in the embodiment of the on-off state configuration method 500 for an NCR node, with the same technical effect achieved. To avoid repetition, details are not described herein again.

It should be understood that the chip provided in this embodiment of this application may also be referred to as a system-level chip, a system on chip, a chip system, a system-on-a-chip, or the like.

An embodiment of this application further provides a computer program or program product. The computer program or program product is stored in a storage medium. The computer program or program product is executed by at least one processor to implement the processes in the embodiment of the on-off state configuration method 200 for an NCR node, or implement the processes in the embodiment of the on-off state configuration method 500 for an NCR node, with the same technical effect achieved. To avoid repetition, details are not described herein again.

An embodiment of this application further provides an on-off state configuration system for an NCR node. The system includes a network-side device and an NCR node. The network-side device may be configured to perform the steps of the on-off state configuration method 200 for an NCR node. The network-side device may be configured to perform the steps of the on-off state configuration method 500 for an NCR node.

It should be noted that the terms "include", "comprise", or any other variation thereof in this specification are intended to cover a non-exclusive inclusion, so that a process, a method, an object, or an apparatus that includes a list of elements not only includes those elements but also includes other elements that are not expressly listed, or further includes elements inherent to such a process, method, object, or apparatus. In absence of more constraints, an element preceded by "includes a..." does not preclude the existence of other identical elements in the process, method, article, or apparatus that includes the element. In addition, it should be noted that the scope of the methods and apparatuses in the implementations of this application is not limited to performing functions in the shown or described order, but may also include performing functions in a substantially simultaneous manner or in a reverse order depending on the functions involved. For example, the described method may be performed in an order different from that described, and steps may be added, omitted, or combined. In addition, features described with reference to some examples may be combined in other examples.

According to the foregoing descriptions of the implementations, persons skilled in the art can clearly understand that the methods in the foregoing embodiments may be implemented by using software in combination with a necessary common hardware platform, or certainly may be implemented by using hardware. However, in most cases, the former is a preferred implementation. Based on such an understanding, the technical solutions of this application essentially or the part contributing to the conventional technology may be implemented in a form of a computer software product. The computer software product is stored in a storage medium (for example, a ROM/RAM, a magnetic disk, or a compact disc), and includes several instructions for instructing a terminal (which may be a mobile phone, a computer, a server, an air conditioner, a network device, or the like) to perform the methods in the embodiments of this application.

The foregoing describes the embodiments of this application with reference to the accompanying drawings. However, this application is not limited to the foregoing specific implementations. The foregoing specific implementations are merely examples, but are not limitative. Inspired by this application, persons of ordinary skill in the art may further make many modifications without departing from the purposes of this application and the protection scope of the claims, and all the modifications shall fall within the protection scope of this application.

## Claims

1. An on-off state configuration method for a base station controlled repeater NCR node, comprising:
sending, by a network-side device, at least one piece of on-off state configuration information to an NCR node, wherein the on-off state configuration information is used for configuring an on-off state of the NCR node, the on-off state configuration information comprises a period parameter for indicating a switching period of an on-off state and an on window parameter for indicating a time period of an on state, and the on window parameter comprises at least one of the following: a time offset and a window length of an on window.

2. The method according to claim 1, wherein the on-off state configuration information further comprises at least one of the following:
configuration information of an uplink beam of an access link, wherein the access link is a radio link between the NCR node and a terminal;
configuration information of a downlink beam of the access link;
configuration information of an uplink beam of a backhaul link, wherein the backhaul link is a radio signal path between the network-side device and the NCR node;
configuration information of a downlink beam of the backhaul link;
configuration information of forwarding power of the NCR node;
sending/receiving configuration information of side control information corresponding to the on-off state;
time-frequency resource configuration information;
a forwarding direction in the on state;
indication information for a forwarding enabling mode in the on window; and
identification information of the on-off state configuration information.

3. The method according to claim 2, wherein the configuration information of the forwarding power comprises at least one of the following:
maximum uplink forwarding power;
maximum uplink forwarding power spectral density;
maximum downlink forwarding power;
maximum downlink forwarding power spectral density;
minimum uplink forwarding power;
minimum uplink forwarding power spectral density;
minimum downlink forwarding power;
minimum downlink forwarding power spectral density;
maximum magnification of the NCR node for forwarding a signal in uplink;
minimum magnification of the NCR node for forwarding a signal in uplink;
maximum magnification of the NCR node for forwarding a signal in downlink;
minimum magnification of the NCR node for forwarding a signal in downlink;
first indication information, wherein the first indication information indicates the NCR node to use a power control ring, or the first indication information indicates the NCR node not to use a power control ring;
second indication information, wherein the second indication information is used for indicating fixed target forwarding power of the NCR node for uplink forwarding or downlink forwarding;
third indication information, wherein the third indication information is used for indicating fixed target forwarding power spectral density of the NCR node for uplink forwarding or downlink forwarding;
fixed power magnification of the NCR node for uplink forwarding in the on state;
fixed power magnification of the NCR node for downlink forwarding in the on state;
a power value of the NCR node in an off state; and
power magnification of the NCR node in the off state.

4. The method according to claim 2, wherein the sending/receiving configuration information of the side control information comprises at least one of the following:
a format configuration of a physical downlink control channel PDCCH for receiving side control information;
a search resource configuration of the PDCCH for receiving the side control information;
a detection position configuration of the PDCCH for receiving the side control information;
a configuration of a control resource set CORSET for receiving side control information; and
a configuration of a radio network temporary identifier RNTI for receiving side control information.

5. The method according to claim 2, wherein the forwarding direction comprises at least one of the following: uplink forwarding and downlink forwarding.

6. The method according to claim 2, wherein the indication information for the forwarding enabling mode in the on window is used for indicating one of the following: forwarding is always enabled in the on window, or forwarding is enabled when side control information is received in the on window.

7. The method according to any one of claims 1 to 6, wherein the sending, by a network-side device, on-off state configuration information to an NCR node comprises one of the following:
sending, by the network-side device, the on-off state configuration information to the NCR node through radio resource control RRC signaling; or
sending, by the network-side device, a part of configuration parameters in the on-off state configuration information to the NCR node through first signaling, and sending the other part of configuration parameters in the on-off state configuration information to the NCR node through second signaling, wherein the first signaling comprises RRC signaling, and the second signaling comprises Medium Access Control MAC control element CE signaling or PDCCH signaling.

8. The method according to claim 7, wherein the second signaling is further used for activating the on-off state configuration information.

9. The method according to claim 7, wherein after the sending, by a network-side device, on-off state configuration information to an NCR node, the method further comprises: sending, by the network-side device, release signaling to the NCR node, wherein the release signaling is used for releasing the on-off state configuration information.

10. The method according to claim 1, wherein after the sending, by a network-side device, at least one piece of on-off state configuration information to an NCR node, the method further comprises:
when a first target on window configured by the on-off state configuration information needs to be activated, sending, by the network-side device to the NCR node in an indication window corresponding to the first target on window, a first indication signal for indicating to activate the first target on window.

11. The method according to claim 10, wherein
the indication window is located before the first target on window; or
the indication window is located in the first target on window, and is located in the front of the first target on window; or
a part of the indication window is located before the first target on window, and the other part is located in the front of the first target on window.

12. The method according to claim 10, wherein before the sending, by the network-side device to the NCR node in an indication window corresponding to the first target on window, a first indication signal for indicating to activate the first target on window, the method further comprises:
sending, by the network-side device, indication window configuration information to the NCR node, wherein the indication window configuration information comprises configuration information of an indication window corresponding to an on window configured by the on-off state configuration information.

13. The method according to claim 12, wherein the indication window configuration information comprises at least one of the following:
a time offset of the indication window;
a window length of the indication window;
a period of the indication window;
a format of downlink control information DCI carrying the first indication signal;
an RNTI corresponding to the DCI;
a time-frequency position at which the DCI is to be received; and
a period of the DCI.

14. The method according to any one of claims 1 to 13, wherein after the sending, by a network-side device, at least one piece of on-off state configuration information to an NCR node, the method further comprises at least one of the following:
sending a second indication signal to the NCR node within on duration of a second target on window configured by the on-off state configuration information, wherein the second indication signal is used for indicating the NCR node to close the second target on window; and
sending a third indication signal to the NCR node within the on duration of the second target on window configured by the on-off state configuration information, wherein the third indication signal is used for indicating the NCR node to extend the on duration of the second target on window.

15. The method according to any one of claims 1 to 14, wherein a plurality of pieces of on-off state configuration information in at least one piece of on-off state configuration information are allowed to be in an active state at the same time.

16. The method according to claim 15, wherein the plurality of pieces of on-off state configuration information allowed to be in the active state at the same time are agreed upon in a protocol.

17. The method according to any one of claims 1 to 14, wherein any two of a plurality of pieces of on-off state configuration information are not allowed to be in an active state at the same time.

18. The method according to any one of claims 1 to 14, wherein the on-off state configuration information further comprises at least one of the following: indication information for indicating a purpose of the on-off state configuration information, and indication information for indicating a priority of the on-off state configuration information.

19. The method according to any one of claims 1 to 14, wherein after the sending, by a network-side device, at least one piece of on-off state configuration information to an NCR node, the method further comprises:
sending, by the network-side device, an operation command to the NCR node, wherein the operation command is used for activating or deactivating one or more of the at least one piece of on-off state configuration information.

20. The method according to claim 19, wherein the operation command comprises an identifier of one or more pieces of on-off state configuration information to be activated or deactivated; or the operation command comprises a bitmap corresponding to the at least one piece of on-off state configuration information, and a bit in the bitmap is used for indicating to activate or deactivate corresponding on-off state configuration information in the at least one piece of on-off state configuration information.

21. **The** method according to claim 19, wherein there are a plurality of operation commands, and one operation command is used for activating or deactivating one piece of on-off state configuration information.

22. **The** method according to claim 19, wherein after the sending, by the network-side device, an operation command to the NCR node, the method further comprises:
receiving, by the network-side device, acknowledgement information sent by the NCR node, wherein the acknowledgement information is used for indicating an activation status of some or all of the at least one piece of on-off state configuration information.

23. An on-off state configuration method for an NCR node, comprising:
receiving, by an NCR node, at least one piece of on-off state configuration information sent by a network-side device, wherein the on-off state configuration information is used for configuring an on-off state of the NCR node, the on-off state configuration information comprises a period parameter for indicating a switching period of an on-off state and an on window parameter for indicating a time period of an on state, and the on window parameter comprises at least one of the following: a time offset and a window length of an on window.

24. The method according to claim 23, wherein the on-off state configuration information further comprises at least one of the following:
configuration information of an uplink beam of an access link, wherein the access link is a link between the NCR node and a terminal;
configuration information of a downlink beam of the access link;
configuration information of an uplink beam of a backhaul link, wherein the backhaul link is a radio signal path between the network-side device and the NCR node;
configuration information of a downlink beam of the backhaul link;
configuration information of forwarding power of the NCR node;
sending/receiving configuration information of side control information corresponding to the on-off state;
time-frequency resource information;
a forwarding direction in the on state;
indication information for a forwarding enabling mode in the on window; and
identification information of the on-off state configuration information.

25. The method according to claim 24, wherein the configuration information of the forwarding power comprises at least one of the following:
maximum uplink forwarding power;
maximum uplink forwarding power spectral density;
maximum downlink forwarding power;
maximum downlink forwarding power spectral density;
minimum uplink forwarding power;
minimum uplink forwarding power spectral density;
minimum downlink forwarding power;
minimum downlink forwarding power spectral density;
maximum magnification of the NCR node for forwarding a signal in uplink;
minimum magnification of the NCR node for forwarding a signal in uplink;
maximum magnification of the NCR node for forwarding a signal in downlink;
minimum magnification of the NCR node for forwarding a signal in downlink;
first indication information, wherein the first indication information indicates the NCR node to use a power control ring, or the first indication information indicates the NCR node not to use a power control ring;
second indication information, wherein the second indication information is used for indicating fixed target forwarding power of the NCR node for uplink forwarding or downlink forwarding;
third indication information, wherein the third indication information is used for indicating fixed target forwarding power spectral density of the NCR node for uplink forwarding or downlink forwarding;
fixed power magnification of the NCR node for uplink forwarding in the on state;
fixed power magnification of the NCR node for downlink forwarding in the on state;
a power value of the NCR node in an off state; and
power magnification of the NCR node in the off state.

26. The method according to claim 24, wherein the sending/receiving configuration information of the side control information comprises at least one of the following:
a format configuration of a physical downlink control channel PDCCH for receiving side control information;
a search resource configuration of the PDCCH for receiving the side control information;
a detection position configuration of the PDCCH for receiving the side control information;
a configuration of a control resource set CORSET for receiving side control information; and
a configuration of a radio network temporary identifier RNTI for receiving side control information.

27. The method according to claim 24, wherein the forwarding direction comprises at least one of the following: uplink forwarding and downlink forwarding.

28. The method according to claim 24, wherein the indication information for the forwarding enabling mode in the on window is used for indicating one of the following: forwarding is always enabled in the on window, or forwarding is enabled when control side control information is received in the on window.

29. The method according to any one of claims 23 to 28, wherein the receiving, by an NCR node, the on-off state configuration information sent by a network-side device comprises one of the following:
receiving, by the NCR node, the on-off state configuration information sent by the network-side device through RRC signaling; or
receiving, by the NCR node, a part of configuration parameters in the on-off state configuration information that are sent by the network-side device through first signaling, and receiving the other part of configuration parameters in the on-off state configuration information that are sent through second signaling, wherein the first signaling comprises RRC signaling, and the second signaling comprises MAC CE signaling or PDCCH signaling.

30. The method according to claim 29, wherein after the receiving, by the NCR node, the on-off state configuration information sent by the network-side device through RRC signaling, the method further comprises:
activating, by the NCR node, the on-off state configuration information.

31. The method according to claim 29, wherein after the receiving, by the NCR node, a part of configuration parameters in the on-off state configuration information that are sent by the network-side device through first signaling, the method further comprises:
setting, by the NCR node, the on-off state configuration information to an inactive state, and activating, by the NCR node, the on-off state configuration information after receiving the second signaling.

32. The method according to claim 30 or 31, wherein after the activating, by the NCR node, the on-off state configuration information, the method further comprises:
receiving, by the NCR node, a release command for the on-off state configuration information, and releasing the on-off state configuration information after deactivating the on-off state configuration information.

33. The method according to claim 23, wherein after the receiving, by an NCR node, at least one piece of on-off state configuration information sent by a network-side device, the method further comprises:
when receiving a first indication signal in an indication window corresponding to a first target on window configured by the on-off state configuration information, activating, by the NCR node, the first target on window, wherein the first indication signal is used for indicating to activate the first target on window.

34. The method according to claim 33, wherein the activating, by the NCR node, the first target on window comprises one of the following:
activating, by the NCR node, the first target on window at an expected enabling position configured by the network-side device; or
activating, by the NCR node, the first target on window based on a window length of the first target on window that is configured by the on-off state configuration information.

35. **The** method according to claim 33, wherein before the receiving, by the NCR node, a first indication signal in an indication window corresponding to a first target on window configured by the on-off state configuration information, the method further comprises:
receiving, by the NCR node, indication window configuration information sent by the network-side device, wherein the indication window configuration information comprises configuration information of an indication window corresponding to an on window configured by the on-off state configuration information.

36. The method according to any one of claims 23 to 35, wherein after the receiving, by an NCR node, at least one piece of on-off state configuration information sent by a network-side device, the method further comprises one of the following:
when receiving a second indication signal sent by the network-side device within on duration of a second target on window configured by the on-off state configuration information, closing, by the NCR node, the second target on window, wherein the second indication signal is used for indicating the NCR node to close the second target on window; or
when receiving a third indication signal sent by the network-side device within the on duration of the second target on window, extending, by the NCR node, the on duration of the second target on window, wherein the third indication signal is used for indicating the NCR node to extend the on duration of the second target on window.

37. The method according to any one of claims 23 to 36, wherein the on-off state configuration information further comprises at least one of the following: indication information for indicating a purpose of the on-off state configuration information, and indication information for indicating a priority of the on-off state configuration information.

38. The method according to any one of claims 23 to 36, wherein the receiving, by an NCR node, at least one piece of on-off state configuration information sent by a network-side device, the method further comprises:
receiving, by the NCR node, an operation command sent by the network-side device, wherein the operation command is used for activating or deactivating one or more of the at least one piece of on-off state configuration information; and
activating or deactivating, by the NCR node according to the operation command, one or more of the at least one piece of on-off state configuration information.

39. The method according to claim 38, wherein the operation command comprises an identifier of one or more pieces of on-off state configuration information to be activated or deactivated; or the operation command comprises a bitmap corresponding to the at least one piece of on-off state configuration information, and a bit in the bitmap is used for indicating to activate or deactivate corresponding on-off state configuration information in the at least one piece of on-off state configuration information.

40. The method according to claim 38, wherein there are a plurality of operation commands, and one operation command is used for activating or deactivating one piece of on-off state configuration information.

41. The method according to claim 38, wherein the activating or deactivating, by the NCR node according to the operation command, one or more of the at least one piece of on-off state configuration information comprises:
when target on-off state configuration information in the at least one piece of on-off state configuration information is in an active state and the operation command indicates to activate the target on-off state configuration information, reactivating, by the NCR node, the target on-off state configuration information based on a configuration parameter carried in the operation command.

42. The method according to claim 38, wherein after the activating or deactivating, by the NCR node according to the operation command, one or more of the at least one piece of on-off state configuration information, the method further comprises:
sending, by the NCR node, acknowledgement information, wherein the acknowledgement information is used for indicating an activation status of some or all of the at least one piece of on-off state configuration information.

43. The method according to claim 38, wherein after the activating or deactivating, by the NCR node according to the operation command, one or more of the at least one piece of on-off state configuration information, the method further comprises:
when a plurality of pieces of on-off state configuration information are in an active state, determining, by the NCR node, to be in the on state in all on windows configured by the plurality of pieces of active on-off state configuration information, or determining, by the NCR node, to be in the on state within a target time period, wherein the target time period is a time period in which the NCR node is configured by all the plurality of pieces of active on-off state configuration information to be in the on state.

44. The method according to claim 38, wherein after the activating or deactivating, by the NCR node according to the operation command, one or more of the at least one piece of on-off state configuration information, the method further comprises:
performing, by the NCR node, signal forwarding in a target time unit, wherein the target time unit is located in an on window configured by one or more pieces of active on-off state configuration information.

45. The method according to claim 44, wherein the performing, by the NCR node, signal forwarding in a target time unit comprises:
when the target time unit is located in on windows configured by a plurality of pieces of active on-off state configuration information, performing, by the NCR node, signal forwarding in the target time unit based on target on-off state configuration information, wherein the target on-off state configuration information is any one of the plurality of pieces of active on-off state configuration information; or
when the target time unit is located in on windows configured by a plurality of pieces of active on-off state configuration information, determining, by the NCR node based on purposes and/or priorities of the plurality of pieces of active on-off state configuration information, target on-off state configuration information to be used in the target time unit, and performing signal forwarding in the target time unit based on the target on-off configuration information, wherein the target on-off state configuration information is one of the plurality of pieces of on-off state configuration information in the active state.

46. The method according to claim 45, wherein the performing, by the NCR node, signal forwarding in the target time unit based on the target on-off configuration information comprises one of the following:
when the target on-off state configuration information comprises configuration information of a forwarding beam, performing, by the NCR node, signal forwarding in the target time unit by using a beam corresponding to the configuration information of the forwarding beam, wherein the forwarding beam comprises an uplink beam or a downlink beam; or
when the target on-off state configuration information comprises configuration information of a forwarding beam and a dynamic beam indication for the target time unit is received, performing, by the NCR node, signal forwarding in the target time unit by using a beam corresponding to the dynamic beam indication.

47. An on-off state configuration apparatus for an NCR node, comprising:
an obtaining module, configured to obtain at least one piece of on-off state configuration information for an NCR node, wherein the on-off state configuration information is used for configuring an on-off state of the NCR node, the on-off state configuration information comprises a period parameter for indicating a switching period of an on-off state and an on window parameter for indicating a time period of an on state, and the on window parameter comprises at least one of the following: a time offset and a window length of an on window; and
a sending module, configured to send the at least one piece of on-off state configuration information to the NCR node.

48. An on-off state configuration apparatus for an NCR node, comprising:
a receiving module, configured to receive at least one piece of on-off state configuration information sent by a network-side device, wherein the on-off state configuration information is used for configuring an on-off state of an NCR node, the on-off state configuration information comprises a period parameter for indicating a switching period of an on-off state and an on window parameter for indicating a time period of an on state, and the on window parameter comprises at least one of the following: a time offset and a window length of an on window; and
an activation module, configured to activate one or more of the at least one piece of on-off state configuration information.

49. A network-side device, comprising a processor and a memory, wherein the memory stores a program or instructions capable of running on the processor, and when the program or instructions are executed by the processor, the steps of the on-off state configuration method for an NCR node according to any one of claims 1 to 22 are implemented.

50. An NCR node, comprising a processor and a memory, wherein the memory stores a program or instructions capable of running on the processor, and when the program or instructions are executed by the processor, the steps of the on-off state configuration method for an NCR node according to any one of claims 23 to 46 are implemented.

51. A readable storage medium, wherein the readable storage medium stores a program or instructions, and when the program or instructions are executed by a processor, the steps of the on-off state configuration method for an NCR node according to any one of claims 1 to 22 are implemented, or the steps of the on-off state configuration method for an NCR node according to any one of claims 23 to 46 are implemented.
